# EUROPEAN PATENT APPLICATION

(11) **EP 0 631 403 A1**
(43) Date of publication of application: **28.12.1994**
(21) Application number: 94107577.2
(22) Date of filing: 17.05.1994
(51) Int. Cl.: H04J 3/06

(54) **System for determining the data burst emission time in TDMA communications**

(30) Priority: 31.05.1993 ES 9301187
(71) Applicant: ALCATEL N.V., NL-1077 XX Amsterdam (NL)
(72) Inventor: Garcia Rivero, Damian, ES-28902 Getafe (Madrid) (ES); Gomez Gascon, Javier, ES-28017 Madrid (ES)
(74) Representative: Pohl, Herbert, Dipl.-Ing

(57) **Abstract**

A set of network terminals (T) connected by optical fibre to an exchange (C), in which the latter sends information to all the terminals (T) that is recognised only by those to which it is addressed and that transmit to the exchange (C) a number of bursts equal to the number of time slots allocated to them.

The invention is characterised in that the network terminal (T) sends a burst of reduced length to the exchange (C) that is received by the latter in a broad range window, that the exchange (C) informs the terminal (T) of the additional delay required to situate it in a narrow range window, the process being repeated in order to situate it finally at a precise moment in such a way that when a complete burst is sent, it is received within the time slot allocated to this burst.

## Description

### OBJECT OF THE INVENTION

This invention refers to a digital burst communications system between an exchange and a set of terminals, based on TDMA practice, in which each terminal has to transmit its burst or set of bursts in perfectly defined time slots without any one of these time slots overlapping with those adjacent because the information in both would be lost.

This invention has particular application in subscriber systems communication systems over optical fibre, in which the propagation delays are greater than the bit period used.

### BACKGROUND TO THE INVENTION

There are various techniques employed in digital burst communications systems of the TDMA type in order to prevent the overlapping of bursts sent by the terminals and which should be situated consecutively, with the consequent loss of information of both bursts.

In the majority of cases it is applied in radio communication systems like, for example, the DECT system, in which relatively wide guard zones are defined with values that cannot ever be exceeded by the maximum permissible delay for signals coming from any terminal.

This method produces a loss of efficiency in the system that is not excessive because of its characteristics of burst length, bit period, maximum distance between base and terminals, etc., meaning that the guard zone, which, expressed in number of bits is sixty, is an acceptable loss compared with the number of bits equivalent to the time slot, which is 480.

Nevertheless, in similar systems that make use of optical fibre and in which the bit rate is significantly greater, as the distances between the exchange and the terminals and the propagation delays to take into account grow, the solution indicated above for radio systems is no longer applicable without a reconsideration of the system that would involve major changes to it.

Thus for example, the duration of a burst in the optical fibre subscriber loop distribution system developed by Alcatel, is more than 400 times less than that of the DECT, whereby the maximum propagation delay of the optical signals through the fibre is much greater than the duration of the bursts; as a result it is necessary to determine with great precision the moment when the terminals have to emit their bursts so that these are received in the exchange at the instant defined in the frame.

### TECHNICAL PROBLEM TO BE OVERCOME

Consequently, the technical problem to be overcome consists in determining, in a digital transmission system over optical fibre between an exchange and a set of TDMA terminals, the moment when the terminals have to send their bursts so that when these are received at the exchange, considering the propagation delays of each of the terminals, they are located in the corresponding time slots defined by the system and allocated by the exchange.

### CHARACTERISATION OF THE INVENTION

This invention is intended for burst communications systems that make use of time division multiple access techniques for subscribers distribution on optical fibre cable.

These systems comprise a set of network terminals and an exchange such that each network terminal receives information generated in the exchange continuously and sent to all the terminals in the network and where each network terminal only recognises that information addressed to it, so that, in answer, it transmits a number of bursts in an identical number of allocated time slots, the process for determining at which moment these bursts are to be sent by the network terminals being characterised in that each network terminal first sends a burst of reduced length that is received by the exchange within a broad range window previously defined according to permissible maximum and minimum delays. Subsequently, when the exchange has detected this reduced length burst it analyses the position within the window mentioned and sends information to the network terminal about how long it should delay the moment of emission of the reduced length burst with respect to the start of the broad range window, whereby this burst is received in a narrow range window inside the previously mentioned broad range window.

The exchange then detects the reduced burst coming from the network terminal for which the transmission moment is being determined, but this time located within the narrow range window, whereby it can examine its position within this window with greater precision than before and again send to the network terminal information on the increase in delay, with respect to that previously defined, after which it has to emit the reduced length burst; all this occurring in such a way that when a complete burst is sent, it is received in the exchange in the time slot allocated to this burst.

The system according to the invention is also characterised in that all of the previous process takes place in conditions of maximum output power for the emission of these reduced length pulses, so that they are received in the exchange even under conditions of maximum attenuation.

Moreover, the system of the invention is characterised in that the broad range window consists of a whole number of time slots within the frame specially dedicated to this function and in which, consequently, no data burst are never sent.

Finally this system has been conceived to achieve an error in temporal shift that is equal to or less than the number of guard bits defined for the frame, so a synchronising system is available in the receiver that permits data recovery even when they are received with small temporal shifts.

As a consequence of applying the system according to the invention a correct positioning is achieved of the data bursts sent by the network terminals in time division multiple access systems without it producing loss of bursts through overlapping during the positioning process.

### BRIEF FOOTNOTES TO THE FIGURES

A fuller explanation of the invention is given based on the following figures in which:

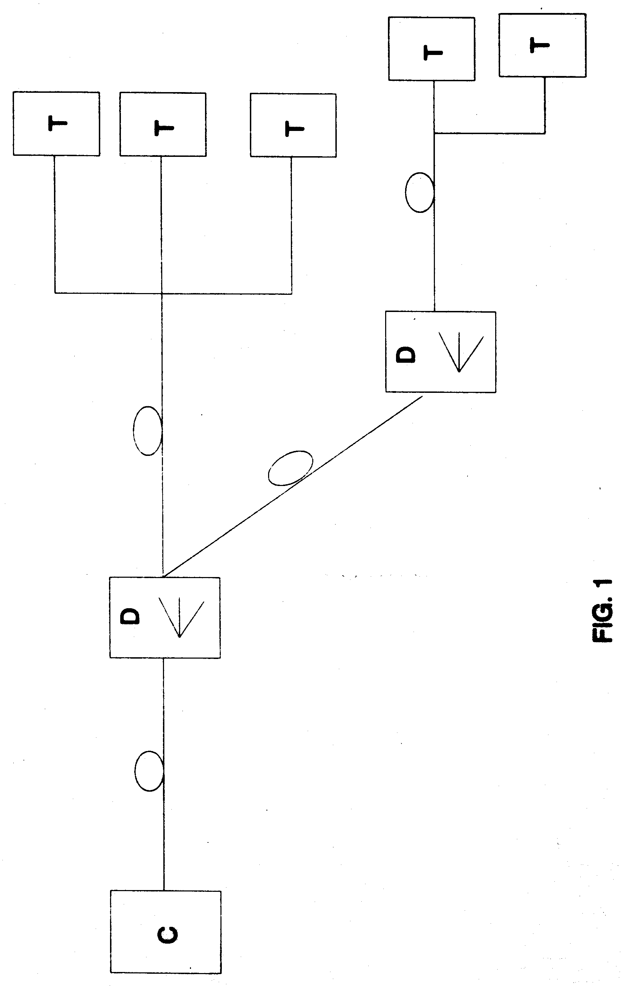

- figure 1 shows a block diagram of the architecture of a subscriber distribution system on optical fibre cable, and
- figure 2 shows a frame architecture in TDMA systems that make use of the object of this invention.

### DESCRIPTION OF THE INVENTION

The object of this invention is described below for a subscriber distribution system on optical fibre, although its application is not limited solely to this type of system.

In this preferred implementation there is a subscriber distribution exchange C that is connected over an optical fibre link to a distributor D in which a split is made to a determined number of optical fibres such that parallel connection can be made to a set of network terminals T that communicate with the exchange over optical fibre links.

A network terminal T can be connected with the exchange without there being any need to use a distributor D (not shown).

When it is wished to establish a logic circuit between the exchange C and a network terminal T on the initiative of either of the two, the network terminal T sends a reduced length burst RR to the exchange C, this being received by the latter at any moment within the broad range window VAR. The exchange calculates the additional delay that this burst should have for it to he received inside a narrow range window VER included in the ending part of the previously mentioned broad range window VAR, and this is communicated to the corresponding network terminal T with a certain quantising error due to the limited number of bits for effecting this communication.

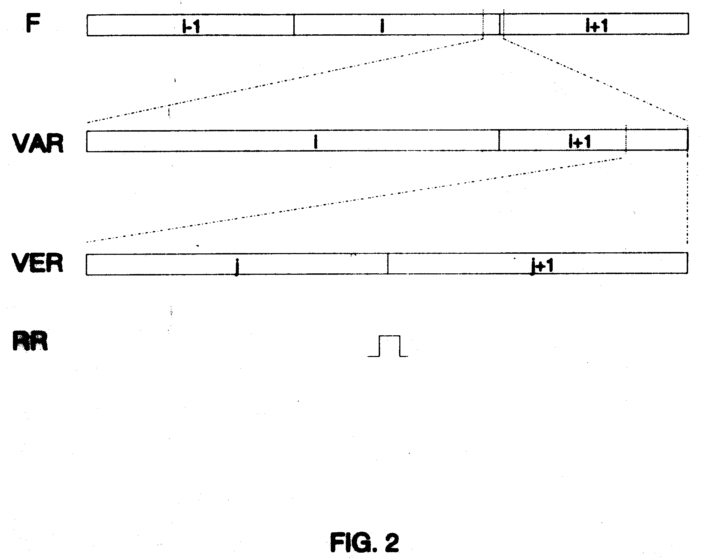

Subsequently the network terminal T resends the reduced length burst RR which this time is received positioned inside the narrow range window VER and which, in the case shown in figure 2, consists of two time slots. The exchange C examines the position in which this second reduced length burst RR was received and informs the network terminal T once again of the increase in delay necessary in sending its bursts so that these are received at determined instants. The quantising error in this case is less since the range window too is significantly less than in the first step.

Once the network terminal T knows its delay it can proceed to send complete bursts to one or more distributors D, in such a way that the delay can vary enormously between different network terminals T depending on the number of fibres that are used and on their corresponding lengths, a maximum length being defined to fix the maximum propagation delay.

In these systems, the subscribers (not shown) are connected with the network terminals T, where each network terminal T can support a large number of subscribers, such that during the communication each subscriber is allocated one burst per frame in the fibre, though the communication between subscriber and network terminal T is done by digital electrical signals of much lower frequency at which the above mentioned problems do not arise.

Due to the high bit rates on the optical fibre, delays cannot be neglected and can vary between zero for a network terminal connected to the exchange over an extremely short fibre, and a previously defined maximum value. For this a broad range window VAR is defined, consisting of a certain number of time slots of the frame F in which are to be received all bursts sent by the network terminals T at the moment this broad range window VAR starts.

Nevertheless the network terminals T do not send a complete burst, but a reduced length burst RR of four bits with the maximum possible amplitude so that reception is assured, and no power problems arise because of its reduced length, in the allocated time slot, to which end it has to add a delay equivalent to the whole number of time slots in the frame (already known). In this way the burst sent is received inside the allocated time slot with a small time shift error that is less than one bit due to the phase of the transmitting clock, jitter, etc.

To overcome this last point, the system has another subsystem for bit synchronising that absorbs errors of one bit and that is not the object of this invention.

## Claims

1. **SYSTEM FOR DETERMINING DATA BURST EMISSION TIME IN TDMA COMMUNICATIONS** for subscriber distribution systems on optical fibre cable in which each network terminal (T) is continuously receiving information coming from the exchange (C) directed to all the network terminals (T), that is only recognised by those to which it is addressed and which transmit to the exchange (C) a number of bursts equal to the number of time slots allocated to them and **characterised:**
- in that the network terminal (T) sends a burst of reduced length (RR) that is received by the exchange (C) inside a broad range window (VAR) previously defined according to possible maximum and minimum delays,
- in that the exchange (C), once having detected the reduced length burst (RR) mentioned, examines its position within said broad range window (VAR) and sends information to the network terminal (T) in question concerning how much it should delay the moment of emitting its reduced length burst (RR) with respect to the start of the broad range window (VAR), so that the reduced length burst (RR) is situated inside a narrow range window (VER), included within the aforementioned broad range window (VAR), with a very tight tolerance, and
- in that the exchange (C), once having detected a second reduced burst (RR), examines its position within the narrow range window (VER) and sends information to the network terminal (T) on how much it should alter the above delay of the moment for emitting its reduced length burst (RR), so that when it sends a complete burst, this is received within the time slot allocated for this burst.

2. **SYSTEM FOR DETERMINING THE DATA BURST EMISSION TIME IN TDMA COMMUNICATIONS** according to claim 1, **characterised** in that the reduced length burst (RR) consists of four bits all having a logic value "1".

3. **SYSTEM FOR DETERMINING THE DATA BURST EMISSION TIME IN TDMA COMMUNICATIONS** according to claim 1**, characterised** in that the transmit power of the reduced length burst (RR) during the process of determining its moment for emitting corresponds to its maximum value.

4. **SYSTEM FOR DETERMINING THE DATA BURST EMISSION TIME IN TDMA COMMUNICATIONS** according to claim 1, **characterised** in that the broad range window (VAR) is formed by a whole number of time slots specially dedicated to this function and in which data bursts are never sent.

5. **SYSTEM FOR DETERMINING THE DATA BURST EMISSION TIME IN TDMA COMMUNICATIONS** according to claim 1, **characterised** in that when the data burst is located inside its allocated time slot, with a maximum permitted shift equal to the number of guard bits, a bit synchronising system is then applied in the receiver of the exchange (C) so that the data can be correctly recovered.
